# EUROPEAN PATENT APPLICATION

(11) **EP 0 687 968 A2**
(43) Date of publication of application: **20.12.1995**
(21) Application number: 95303884.1
(22) Date of filing: 06.06.1995
(51) Int. Cl.: G06F 1/00

(54) **Access to portable computers and associated identification**

(30) Priority: 13.06.1994 US 259026
(71) Applicant: INTERNATIONAL BUSINESS MACHINES CORPORATION, Armonk, N.Y. 10504 (US)
(72) Inventor: Cohen, Mark Evan, Cary, North Carolina 27513 (US); Park, Se-Jung, Boca Raton, Florida 33486 (US); Rengan, Marco Michael, Boca Raton, Florida 33486 (US)
(74) Representative: Lloyd, Richard Graham

(57) **Abstract**

A method and system for providing an indicia of personal ownership of a portable computer device which includes a processor, a memory for storing multiple files and applications, a video display device, a keyboard and a power switch for applying electrical power to the portable computer device. A textual indicia of personal ownership is entered by the owner of the system during set-up or during a configuration change and electronically stored within nonvolatile memory, such as serial EEPROM, within the portable computer device. Thereafter, each time power is applied to the portable computer device a Power-On System Test (POST) process is initiated which, after testing system parameters, automatically retrieves and displays the textual indicia of personal ownership, greatly enhancing the likelihood that a misplaced portable computer device will be returned to its owner. A password prompt may also be displayed and entry by user of the appropriate password will be required in order to access the files and applications stored within the portable computer device.

## Description

The present invention relates in general to computers and in particular to personalizing of portable computer devices.

Personal computer systems are becoming more and more prevalent in the modern work place. Traditional desk-top computers are now commonly utilized in both the home and office. As the technical complexity of these devices has increased, so has the efficiency of manufacturers at packaging these devices within increasingly smaller packages. The evolution from personal computer to lap-top computer, to notebook computer, to sub-notebook computer has resulted in portable computer devices which are commonly utilized in automobiles, on airplanes and within many similar non-traditional workspaces. Additionally, the increasing utilization of so-called "Personal Digital Assistants" (PDA's) within the modern business environment has further increased the likelihood that a portable computer device of this type may be misplaced or lost.

A problem which exists when such devices are lost results as a consequence of the fact that most devices commonly employ a password protection scheme to control access to the system. In such schemes only the authorized computer user is assigned a password. Each time the user wishes to utilize the portable computer device he or she must first enter his or her password. If the computer recognizes this password as valid, the user will be permitted to access data and/or execute applications which are stored within the portable computer device.

While the utilization of password protection schemes maintains the integrity of data and applications within such devices, such schemes render a determination of ownership of such a device which has been lost or misplaced quite difficult by the individual who finds the device. Thus, while security with respect to access to the files and applications within such a device is highly desirable it should be apparent that a need exists for a method and/or system whereby the personal ownership information for a portable computer device may be simply and efficiently determined in a manner which increases the likelihood that a lost or misplaced portable computer device may be returned to its owner.

Today information regarding the ownership of a portable computer device is typically provided within the carrying case or by utilizing decals or labels attached to the computer. While the system does provide some information regarding ownership of the computer, the likelihood that the device may be separated from its carrying case or identifying decal or label renders these solutions somewhat less than optimal.

The present invention is directed to providing an improved method and system for personalizing a portable computer device.

Accordingly the invention provides a method for personalizing a portable computer device which includes a processor, a memory, multiple files stored within said memory, a video display device, a keyboard and means for applying electrical power to said portable computer device, said method comprising the steps of:
electronically storing an indicia of personal ownership of said portable computer device within said memory; and
automatically displaying said indicia of personal ownership within said video display in response to each application of electrical power to said portable computer device.

Viewed from another aspect, the invention provides a portable computer device, said portable computer device comprising:
a processor;
a memory coupled to said processor having indicia of personal ownership and multiple files stored therein;
a video display device coupled to said processor;
a keyboard coupled to said processor;
a power switch for applying electrical power to said processor in response to an operation thereof; and
means for automatically displaying said indicia of personal ownership within said video display device in response to each application of electrical power to said processor.

In one embodiment, a textual indicia of personal ownership is entered by the owner of the system during set-up or during a configuration change and electronically stored within nonvolatile memory, such as serial EEPROM, within the portable computer device. Thereafter, each time power is applied to the portable computer device a Power-On System Test (POST) process is initiated which, after testing system parameters, automatically retrieves and displays the textual indicia of personal ownership, greatly enhancing the likelihood that a misplaced portable computer device will be returned to its owner. A password prompt may also be displayed and entry by user of the appropriate password will be required in order to access the files and applications stored within the portable computer device.

An embodiment of the invention will now be described with reference to the accompanying drawings, wherein:
Figure 1 is a pictorial representation of a portable computer device;
Figure 2 is a high level block diagram of selected components of the portable computer device of Figure 1;
Figure 3 is a high level logic flowchart which illustrates a process for implementing the present invention; and
Figure 4 is a high level logic flowchart which illustrates the automated display of personal ownership indicia within a portable computer device.

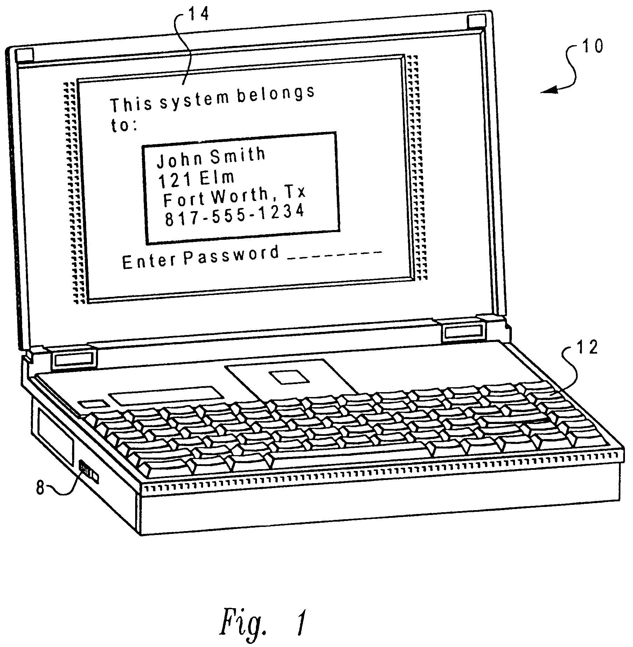

With reference now to the figures and in particular with reference to Figure 1, there is depicted a pictorial representation of a portable computer device 10. As illustrated, portable computer device 10 may comprise a notebook, sub-notebook or lap-top computer or, in an alternate embodiment may be implemented utilizing a so-called "Personal Digital Assistant" (PDA). As illustrated, portable computer device 10 preferably includes a video display device 14 and a keyboard 12. Video display device 14 may be implemented utilizing a liquid crystal display or, a vacuum-fluorescent display or any other suitable technique for providing a visual output. As illustrated, video display device 14 may be utilized to display an indication of ownership of portable computer device 10, in a manner which will be explained in greater detail herein.

Additionally, portable computer device 10 preferably includes a battery system for providing electrical power for portable computer device 10 or, in the alternative, an alternating current adapter may be utilized in order to provide electrical power to portable computer device 10. As is common in such devices a power switch **8** is provided which is utilized to apply electrical power to the components within portable computer device 10 in a manner well known in the art.

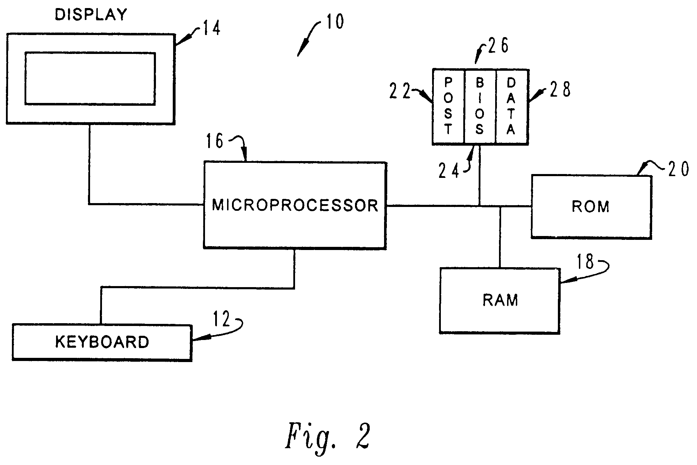

Referring now to Figure 2, there is depicted a high level block diagram of portable computer device 10 of Figure 1 which illustrates selected components of that device. As illustrated, portable computer device 10 preferably includes a microprocessor 16 which is utilized to control the operations of portable computer device 10. Microprocessor device 16 is preferably coupled to keyboard 12 and video display device 14 in a manner well known to those having ordinary skill in the art.

Also depicted within Figure 2 is random access memory (RAM) 18 and read only memory (ROM) 20 which are coupled to microprocessor 16 in a manner well known to those having ordinary skill in this art. As illustrated within Figure 2, an additional programmable nonvolatile memory device, such as ROM 26 is provided. ROM 26 is preferably implemented utilizing so-called "flash" ROM or serial EEPROM, which may be electrically altered upon application of suitable control signals. ROM 26 preferably includes a segment thereof which is utilized to store the process known as Basic Input/Output System (BIOS) and Power-On System Test (POST) 24 and 22. These processes are utilized, as is common in such devices, to control the interrelation between microprocessor 16 and the various components of portable computer device 10 and to perform an initial test of the components of portable computer device 10 upon each application of electrical power to microprocessor 16. One important feature of the present embodiment involves a modification of Power-On System Test (POST) 22 in a manner such that an automatic display of personal ownership indicia may be obtained, after that data has been stored within data panel 28 of ROM 26. In the depicted embodiment, this data may be stored within a 256 byte segment of ROM 26.

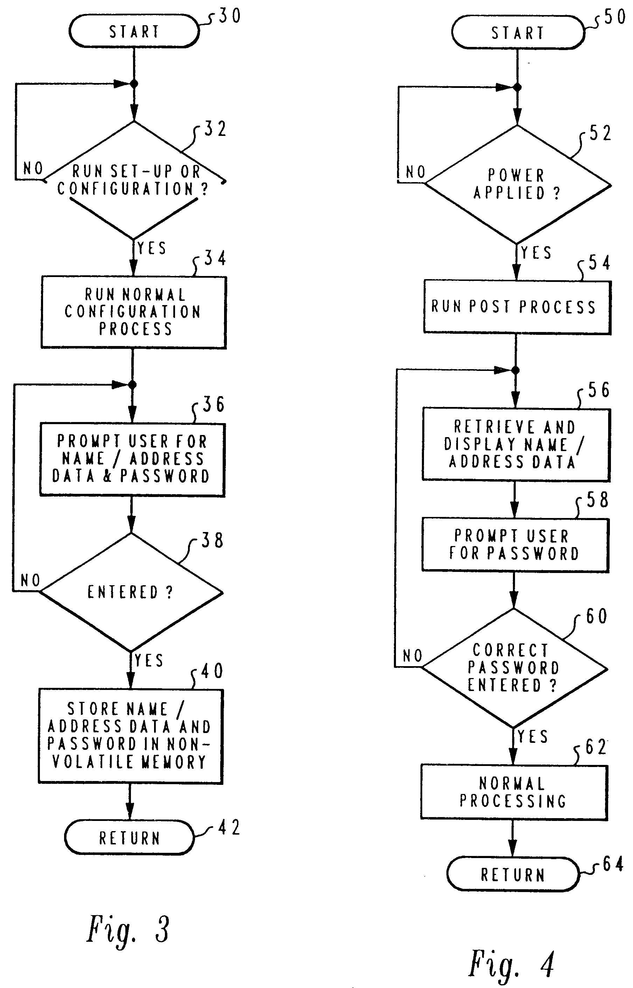

With reference now to Figure 3, there is depicted a high level logic flowchart which illustrates a process for implementing the present invention. As depicted, this process begins at block 30 and thereafter passes to block 32. Block 32 illustrates a determination of whether or not the "set-up" program has been initiated. Those skilled in the art will appreciate that such a program is typically utilized to configure portable computer device 10 upon an alteration of the subsystems of that device or in response to an initial utilization of the device. Thus, the type of display device utilized, the amount of memory, the number and location of disk drives utilized and other system parameters are typically established during this set-up process. In the event the setup process has not been initiated, the process illustrated within Figure 3 merely iterates until such time as this set-up process occurs. Of course, those skilled in the art will appreciate that an additional level of security, such as a secondary password, may be required to alter the ownership indicia which will be entered as part of this process.

Still referring to block 32, in the event the set-up process has been initiated, block 34 illustrates the running of normal configuration programs. Thereafter, the process passes to block 36. Block 36 illustrates the prompting of the user to enter personal ownership indicia, such as name and address data which may thereafter, be illustrated within video display device 14 as depicted within Figure 1. Additionally, the user may be prompted at this time to enter a particular password which will be utilized to ensure that only an authorized computer user is permitted to access the files and applications within portable computer device 10. Thereafter, the process passes to block 38. Block 38 illustrates a determination of whether or not the personal ownership indicia and password data has been entered, and if not, the process returns in an iterative fashion to block 36 to once again prompt the user for this data.

Still referring to block 38, in the event the personal ownership indicia requested has been entered, the process passes to block 40. Block 40 illustrates the storing of the personal ownership indicia and password data within nonvolatile memory, such as ROM 26, within portable computer device 10. While the present invention may be implemented utilizing the storage of this information within random access memory (RAM) which is continuously supplied from a battery, such systems may be easily defeated by opening the case of portable computer device 10 and temporarily removing that battery, rendering this information erased. Thus, the present embodiment illustrates the storing of this personal ownership indicia and password information within nonvolatile memory, preferably a separate module mounted to the motherboard of portable computer device 10. Thereafter, the process passes to block 42 and returns.

Finally, referring to Figure 4, there is depicted a high level logic flowchart which illustrates the automated display of personal ownership indicia within a portable computer device. As depicted, this process begins at block 50 and thereafter passes to block 52. Block 52 illustrates a determination of whether or not power has been applied to portable computer device 10, if not, this process merely iterates until such time as power has been applied.

Still referring to block 52, once power has been applied to portable computer device 10, whether internally from self-contained batteries or utilizing an alternating current power supply, the process passes to block 54. Block 54 illustrate the running of the Power-On System Test (POST) in a manner well known to those having ordinary skill in the art.

Next the Power-On System Test (POST) process has been modified to initiate the retrieval from nonvolatile memory of the personal ownership indicia stored therein and block 56 illustrates the retrieval and display of this information, preferably comprising the owner's name and address, utilizing video display device 14.

Next, the process passes to block 58. Block 58 illustrates the prompting of the user for a password. The process then passes to block 60. Block 60 illustrates a comparison between the password entered by the user and the particular password stored by the user within nonvolatile memory during system set-up. If the appropriate password has not been entered, the process returns, in an iterative fashion, to block 56 to once again display the owner's name and address or other personal ownership indicia. However, in the event the appropriate password has been entered, the password passes to block 62. Block 62 illustrates the occurrence of normal processing in a manner well known to those having skill in this art. Thereafter, this process passes to block 64 and returns.

Upon reference to the foregoing those skilled in the art will appreciate that the Applicants herein have provided a novel method and system whereby personal ownership indicia may be stored within nonvolatile memory within a portable computer device during system set-up or configuration and wherein the Power-On System Test (POST) process has been altered to retrieve this information and display the personal ownership indicia automatically upon each application of electrical power to the portable computer device. This simple expedient provides a technique whereby the likelihood that a lost or misplaced personal computer device will be returned to its owner has been greatly enhanced and whereby ownership of otherwise fungible devices may be easily determined.

While the invention has been particularly shown and described with reference to a preferred embodiment, it will be understood by those skilled in the art that various changes in form and detail may be made therein without departing from the scope of the invention.

## Claims

1. A method for personalizing a portable computer device which includes a processor, a memory, multiple files stored within said memory, a video display device, a keyboard and means for applying electrical power to said portable computer device, said method comprising the steps of:
electronically storing an indicia of personal ownership of said portable computer device within said memory; and
automatically displaying said indicia of personal ownership within said video display in response to each application of electrical power to said portable computer device.

2. The method for personalizing a portable computer device according to claim 1, further including the step of prompting a user to enter said indicia of personal ownership via said keyboard in response to an initial set-up of said portable computer device.

3. The method for personalizing a portable computer device according to claim 2, further including the step of prompting a user to select a particular password to be utilized for access to said portable computer device in response to an initial set-up of said portable computer device.

4. The method for personalizing a portable computer device according to claim 3, further including the step of prompting a user to enter a password via said keyboard after automatically displaying said indicia of personal ownership within said video display device in response to each application of electrical power to said portable computer device.

5. The method for personalizing a portable computer device according to claim 4, further including the step of comparing said entered password with said particular password.

6. The method for personalizing a portable computer device according to claim 5, further including the step of granting access to said multiple files stored within said memory only in response to an exact comparison between said entered password and said particular password.

7. The method for personalizing a portable computer device according to any preceding claim, wherein said memory includes nonvolatile memory and wherein said step of electronically storing an indicia of personal ownership of said portable computer device within said memory comprises the step of storing said indicia of personal ownership of said portable computer device within said nonvolatile memory.

8. The method for personalizing a portable computer device according to any preceding claim, wherein said computer device incudes a Power-On System Test process which is initiated in response to each application of electrical power to said portable computer device and wherein said step of automatically displaying said indicia of personal ownership within said video display device in response to each application of electrical power to said portable computer device comprises the step of accessing said indicia of personal ownership within said nonvolatile memory and displaying said indicia of personal ownership within said video display device during said Power-On System Test process.

9. A portable computer device, said portable computer device comprising:
a processor;
a memory coupled to said processor having indicia of personal ownership and multiple files stored therein;
a video display device coupled to said processor;
a keyboard coupled to said processor;
a power switch for applying electrical power to said processor in response to an operation thereof; and
means for automatically displaying said indicia of personal ownership within said video display device in response to each application of electrical power to said processor.

10. The portable computer device according to claim 9, further including means for prompting a user to enter said indicia personal ownership via said keyboard in response to an initial set-up of said portable computer device.

11. The portable computer device according to claim 10, further including means for prompting a user to select a particular password to be utilizing for access to said portable computer device in response to an initial set-up of said portable computer device.

12. The portable computer device according to claim 11, further including means for prompting a user to enter a password via said keyboard after automatically displaying said indicia of personal ownership within said video display device in response to each application of electrical power to said processor.

13. The portable computer device according to clam 12, further including means for comparing said entered password with said particular password.

14. The portable computer device according to claim 13, further including means for granting access to said multiple files stored within said memory only in response to an exact comparison between said entered password and said particular password.

15. The portable computer device according to any of claims 9 to 14, wherein said memory includes a nonvolatile memory device and wherein said indicia of personal ownership is stored within said nonvolatile memory device.

16. The portable computer device according to any of claims 9 to 15, wherein said portable computer device includes a Power-On System Test process which is initiated in response to each application of electrical power to said portable computer device and wherein said means for automatically displaying said indicia of personal ownership within said video display device in response to each application of electrical power to said processor comprises means for accessing said indicia of personal ownership within said nonvolatile memory device and for displaying said indicia of personal ownership within said video display device during said Power-On System Test process.
